# EUROPEAN PATENT SPECIFICATION

(11) **EP 1 003 623 B1**
(45) Date of publication and mention of the grant of the patent: **08.02.2006**
(21) Application number: 96919935.5
(22) Date of filing: 31.05.1996
(51) Int. Cl.: B23K 20/02

(54) **MULTIPLE UPSET, COLD PRESSURE, WELDING APPARATUS**
MEHRFACH KALTPRESS-STUMPFSCHWEISSGERÄT
APPAREIL DE SOUDAGE A FROID, PAR REFOULEMENT MULTIPLE

(30) Priority: 06.06.1995 GB 9511424
(43) Date of publication of application: 31.05.2000
(73) Proprietor: Coldweld Limited, a British Company, Kent TN23 7SH (GB)
(72) Inventor: HAWKES, Daniel John, Ashford, Kent TN26 1HL (GB)
(74) Representative: Lewis, David Overington
(86) International application number: PCT/GB1996/001289
(87) International publication number: WO 1996/039272

(56) References cited:
- GB-A- 2 160 138
- US-A- 2 891 430
- US-A- 3 613 984
- US-A- 4 815 648

## Description

This invention relates to multiple upset, cold pressure, welding apparatus according to preamble of claim 1 for effecting butt welds in wire, rod, strip or tubular workpieces. WO-A-90/09862 describes such an apparatus capable of effecting successful cold pressure welds in copper wires or rods of up to approximately 10 millimetres diameter and in aluminium wires or rods of up to 19 millimetres in diameter. The apparatus is provided with a set of two pairs of die halves mounted on a framework on hydraulically actuated piston and cylinder assemblies. The die halves of each pair are relatively radially reciprocable to grip or release an end portion of an associated workpiece and the two pairs of die halves are relatively axially reciprocable by means of a further hydraulically actuated piston and cylinder assembly to effect cold pressure welding together of abutting end portions of the workpieces by way of a multiple upset operation.

GB-A-728 139 describes an earlier, hand-held, apparatus for fine wire in which two lever arms are actuated manually and are pivoted together to apply clamping and welding pressure to end portions of fine wire workpieces held in jaws carried on a fixed block. Two bench mounted type tools operated by a single, hand-operated lever and having fixed and moving holders for pairs of jaws are also described.

Other forms of multiple upset, cold pressure, welding apparatus utilising hydraulic or pneumatic actuators are also well-known in the art.

However, manually operated, multiple upset, cold pressure, welding apparatus suffers from a limitation on the size of the workpieces whilst the apparatus utilising hydraulic or pneumatic actuators is constrained by initial cost limitations.

By the present invention there is provided multiple upset, cold pressure, welding apparatus including a welding die set having two pairs of die halves each formed with a groove providing a bore in a closed position of the respective pairs of die halves for effecting gripping of end portions of first and second workpieces reciprocable between the closed position in which the associated portion of the workpiece is gripped and an open position in which the associated portion of the workpiece is released and also being reciprocable in a direction parallel to the longitudinal axis of the workpieces to apply or relax a welding pressure across abutting faces of the end portions of the workpieces, wherein means for translating a rotary motion to a reciprocating linear motion are connected to a rotary output shaft of a speed reducing gear means in turn connected to an electric drive means, and are connected to reciprocate the die halves.

The invention will now be described, by way of example, with reference to the accompanying, partly diagrammatic, drawings, in which :-
Figure 1 is an end elevation of actuating means of a multiple upset, cold pressure, welding apparatus;
Figure 2 is an end elevation of an alternative arrangement of the actuating means of Figure 1;
Figure 3 is a side elevation corresponding to Figure 2;
Figure 4 is an end elevation of a further alternative arrangement of the actuating means of Figure 1;
Figure 5 is an end elevation of a yet further alternative arrangement of the actuating means of Figure 1;
Figure 6 is an end elevation of actuating means of a more complex form of multiple upset, cold pressure, welding apparatus;
Figure 7 is a plan view corresponding to Figure 6;
Figure 8 is an end elevation of an alternative arrangement of the actuating means of Figure 6;
Figure 9 is a plan view corresponding to Figure 8;
Figure 10 is an end elevation of actuating means of another form of multiple upset, cold pressure, welding apparatus;
Figure 11 is a plan view corresponding to Figure 10;
Figure 12 is a front elevation corresponding to Figure 10; and
Figure 13 is a plan view corresponding to Figure 12.

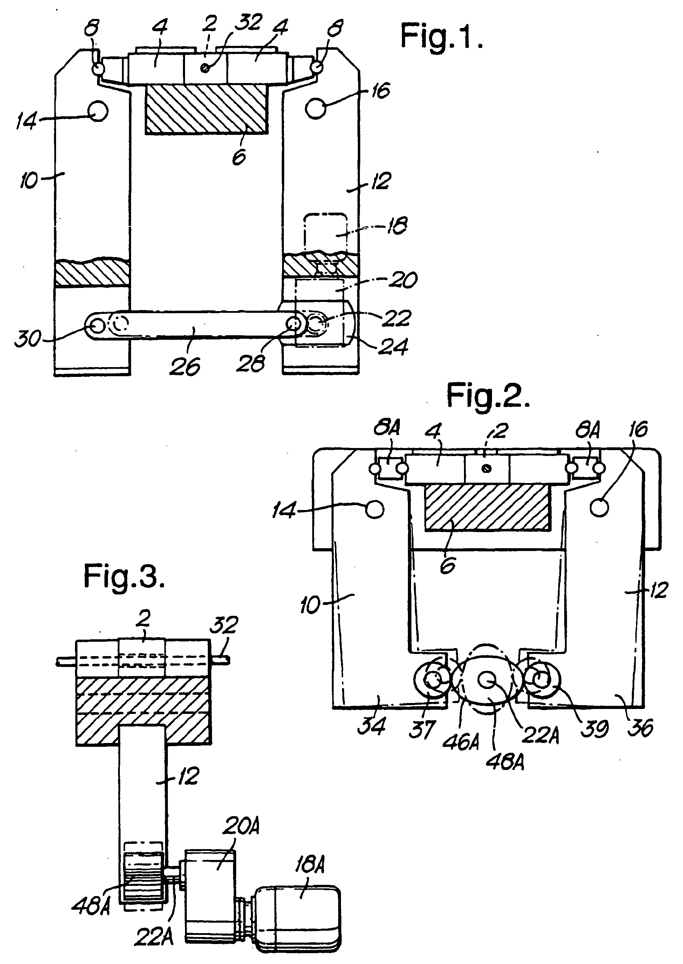

Referring to the arrangement shown in Figure 1, a multiple upset, cold pressure, welding die set 2 generally such as of the form described in GB-A-728 139 is positioned in a pair of blocks 4 slidingly reciprocable in a housing 6 mounted on a frame (not shown). The blocks 4 are provided with pivot connections 8 to lever arms 10, 12 mounted on fulcrum pins 14, 16 on the frame. The lever arm 12 carries a high torque, low speed, electric motor 18 and a speed reducing gear box 20 with an output shaft 22 carrying a crank 24. A connecting rod 26 is positioned between a crank pin 28 on the crank 24 and connecting pin 30 on the lever arm 10. The electric motor 18 is energisable from a mains supply or an independent power pack (not shown).

In operation, end portions of wire workpieces 32 to be butt welded together are positioned within jaws of the die set 2. The electric motor 18 is then energised to rotate the crank 24 and to produce an oscillation of the lever arms about the fulcrum pins 14, 16 by virtue of the reciprocatory motion produced by the connecting rod 26 cooperating with the crank 24. This, in turn, produces a reciprocatory movement of the pivot connections 8 and the associated blocks 4 to move the jaws of the die set 2 between gripping and open positions whilst applying or relaxing welding pressure. After an appropriate number of cycles to effect a multiple upset weld, the electric motor 18 is de-energised and the welded wire removed from the die set 2.

In an alternative arrangement, not shown, the electric motor 18 is mounted separately on the frame and the connecting rod 26 is positioned between the crank 24 and a central pivot of a pair of toggle links, outer ends of the toggle links being connected respectively to the lever arms 10, 12.

In the arrangement shown in Figures 2 and 3 cam follower rollers 37, 39 are mounted directly on the outer end portions 34, 36 of the lever arms 10, 12 remote from pivot connections 8A to the blocks 4. The lever arms are biassed by spring means (not shown) toward each other such that the rollers 37, 39 are biassed into contact with an elliptical cam surface 46A on a cam 48A positioned intermediate the outer end portions 34, 36 and such that rotation of the cam 46A produces an oscillatory movement of the lever arms 10, 12. The cam 46A is mounted on an output shaft 22A of a reducing gear box 20A driven from a high torque, low speed, electric motor 18A.

In operation, the multiple upset, cold pressure, butt weld is effected in a manner similar to that described in connection with Figure 1, with energisation of the electric motor 18A effecting rotary movement of the cam 48A as indicated in chain dotted outline. The cam follower rollers 37, 39 are biassed into contact with the elliptical cam surface 46A and thus produce an oscillatory movement of the lever arms 10,12. The elliptical cam surface 46A is profiled to give a dynamic characteristic to the oscillatory movement appropriate to the multiple upset weld requirements.

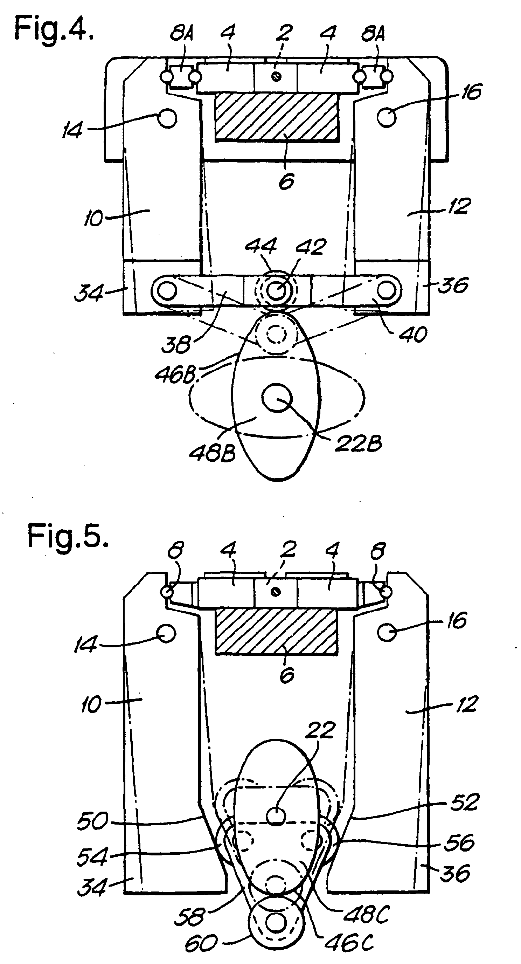

In the arrangement shown in Figure 4, the lever arms 10, 12 are connected together, at outer end portions 34, 36 remote from pivot connections 8A to the blocks 4, by a pair of toggle links 38, 40 having a central pivot 42. The central pivot 42 also carries a cam follower roller 44 co-acting with an elliptical cam surface 46B on a cam 48B mounted on the output shaft 22B of the speed reducing gear box and high torque, low speed, electric motor (not shown in this Figure).

In operation, the multiple upset, cold pressure, butt weld is effected in a manner similar to that described in connection with Figure 1, with energisation of the electric motor effecting rotary movement of the cam 48B as indicated in chain dotted outline. The cam follower roller 44 is biassed into contact with the elliptical cam surface 46B and thus produces a reciprocatory motion at the central pivot 42 of the toggle links 38, 40 and hence an oscillatory movement of the lever arms 10, 12. The elliptical cam surface 46B is profiled to give a dynamic characteristic to the oscillatory movement appropriate to the multiple upset weld requirements.

In the arrangement shown in Figure 5, the outer end portions 34, 36 of the lever arms 10, 12 are formed with ramp surfaces 50, 52 and are resiliently biassed toward each other by a spring (not shown). Rollers 54, 56 positioned on a wedge 58 co-operate with the ramp surfaces 50, 52 and the wedge 58 is reciprocated on rails (not shown) by inter-action between a cam follower roller 60 on the wedge and an elliptical cam surface 46C on a cam 48C positioned on an output shaft 22C of the speed reducing gear box and the high torque, low speed, electric motor (not shown in this Figure).

In operation, the multiple upset, cold pressure, butt weld is effected in a manner similar to that described in connection with Figure 1, with energisation of the electric motor effecting rotary movement of the cam 48C as indicated in chain dotted outline. The reciprocatory motion produced at the cam follower roller 46C during rising and falling portion of the cam cycle produces a reciprocatory motion at the wedge 58. As the rollers 54, 56 are constrained to ride up the ramps 50, 52 the outer end portions 34, 36 of the lever arms 10, 12 are urged apart. During a falling portion of the cam cycle, the rollers 54, 56 ride down the ramps 50, 52, as indicated in chain dotted outline, and the outer end portions 34, 36 are urged towards each other by the effect of the spring bias. Thus the lever arms 10, 12 are oscillated and produce a reciprocatory motion to effect the multiple upset welding operation at the die set 2. The elliptical cam surface 46C is profiled to produce the necessary dynamic characteristics for the multiple upset welding operation.

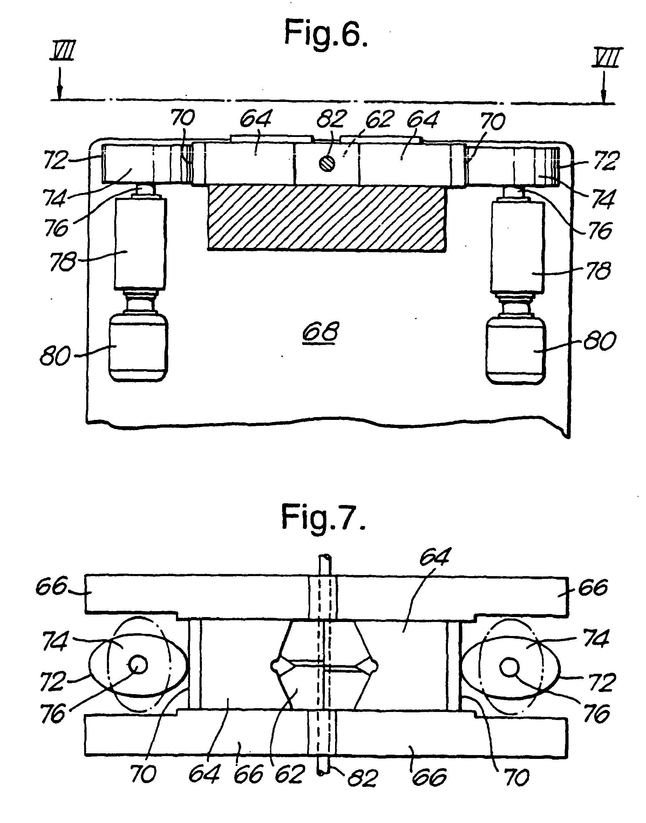

In the arrangement shown in Figures 6 and 7, a multiple upset, cold pressure, welding die set 62, generally such as of the form described in US-A-3 336 655 is positioned in a pair of blocks 64 slidingly reciprocable in a housing 66 mounted on a frame 68. The blocks 64 are resiliently biassed apart by compression springs (not shown) and have cam following end faces 70 co-acting with elliptical cam surfaces 72 formed on rotary cams 74 mounted on output shafts 76 of speed reducing gear boxes 78 and electric drive motors 80 arranged to be driven in synchronism.

In operation, end portions of workpieces 82 to be butt welded together are positioned within jaws of the die set 62. The electric motors 80 are then energised to rotate the cams 74 in unison, as indicated in chain dotted outline, and thus, during a rising portion of the cam cycle, urge the blocks 64 toward each other. The compression spring bias acts to urge the blocks away from each other during the falling portion of the cam cycle. After an appropriate number of cycles to effect a multiple upset weld, the electric motors 80 are de-energised and the welded workpiece removed from the die set 62. The elliptical cam surfaces 72 are identical and are profiled to produce the necessary dynamic characterisitics for the multiple upset welding operation. A sequencing controller (not shown) is arranged to ensure that the electric motors are driven in synchronism.

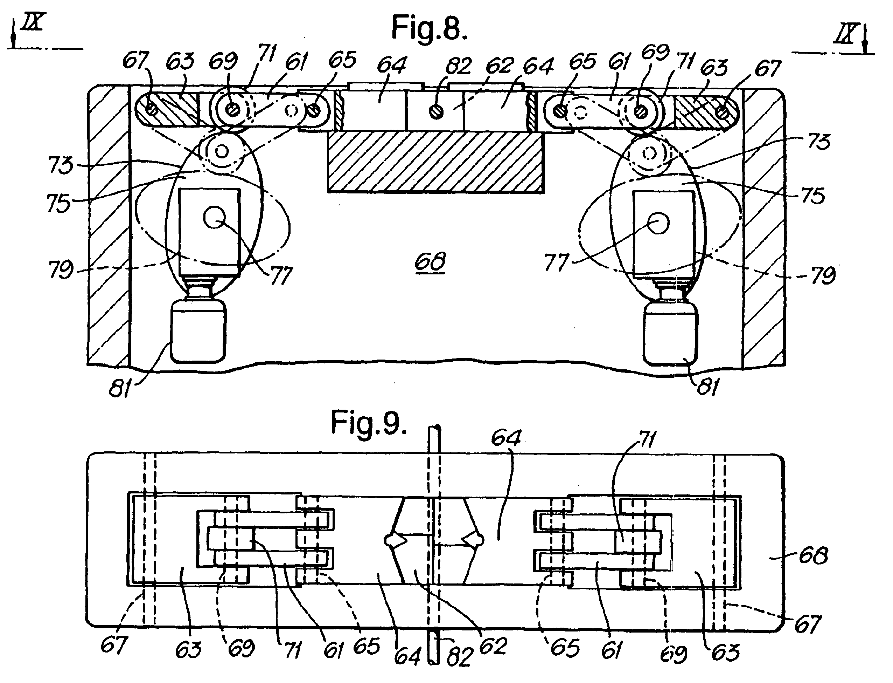

In a modified form of the arrangement described in conjunction with Figures 6 and 7, as shown in Figures 8 and 9, in substitution for the arrangement of the elliptical cam surfaces 72 co-acting with the end faces 70 of blocks 64 shown in Figures 6 and 7, there are provided two pairs of toggle links 61, 63 connected to the blocks 64 at pivots 65 and to the frame 68 at pivots 67. Central pivots 69 carry cam follower rollers 71 co-acting with elliptical cam surfaces 73 on cams 75 mounted on output shafts 77 of speed reducing gear boxes 79 and high torque, low speed, electric drive motors 81.

In operation, end portions of workpieces 82 to be butt welded together are positioned within jaws of the die set 62. The electric motors 81 are then energised synchronously to rotate the cams 75 in unison, as indicated in chain dotted outline, and, by virtue of the inter-action between the elliptical cam surfaces 73 and the cam follower rollers 71 to effect lateral displacement of the central pivots 69 of the pairs of toggle links 61, 63 - thereby producing a synchronised reciprocating movement of the blocks 64 to effect multiple upset welding together of the workpiece portions at the die set 62. The elliptical cam surfaces 73 are identical and are profiled to produce the necessary dynamic characteristics for the multiple upset welding operation.

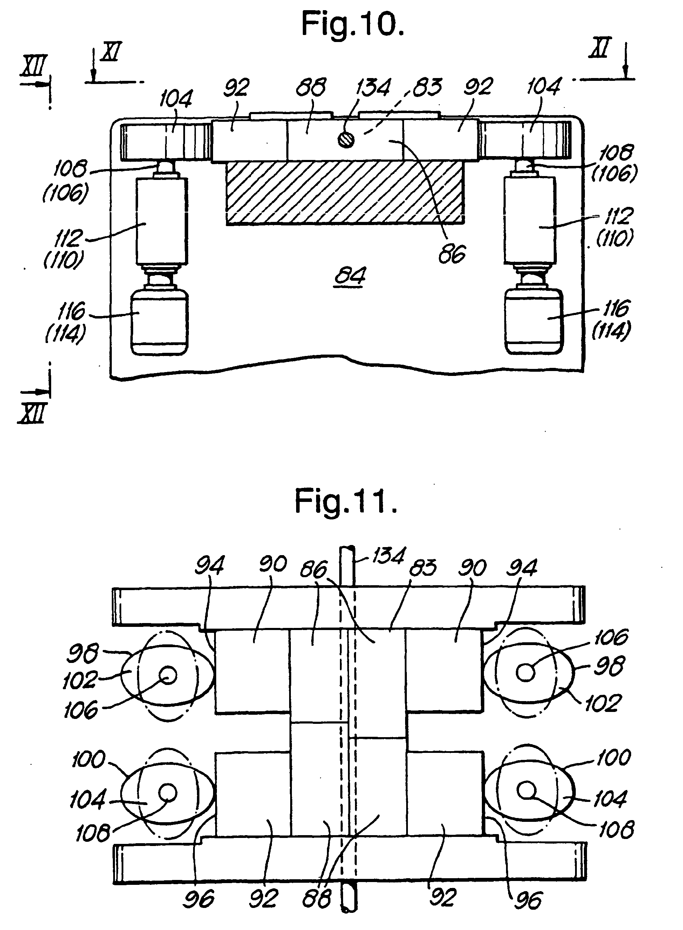

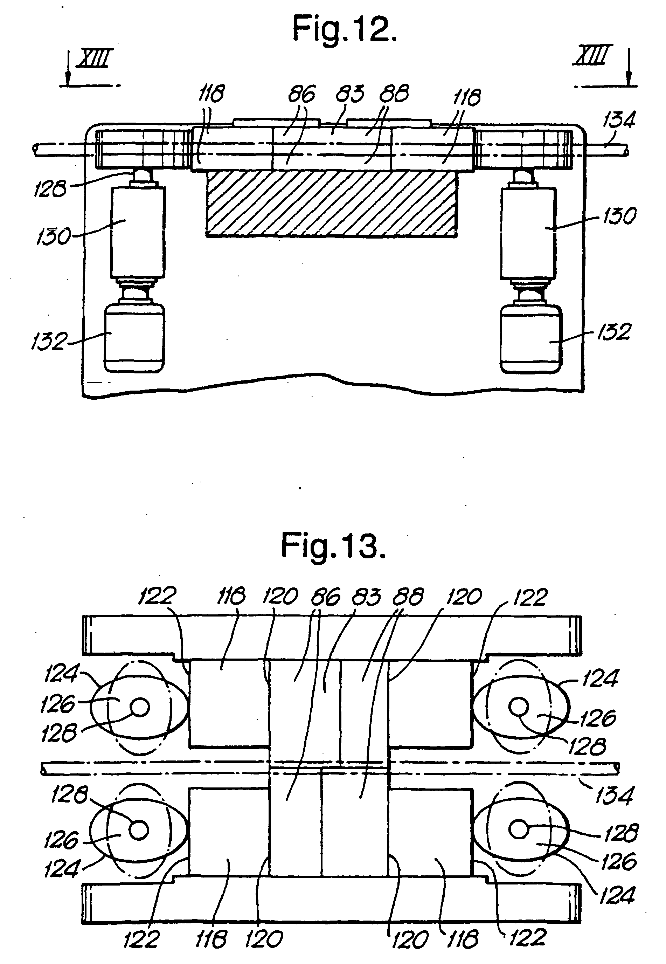

The arrangement shown in Figures 10, 11, 12 and 13 includes a multiple upset, cold pressure, welding die set 83, generally of the form described in WO-A-90/09862. The apparatus includes a frame 84 having mounted thereon, for reciprocable movement, a pair of clamp bodies 86, 88 resiliently biassed apart by compression springs (not shown) and positioned in thrust blocks 90, 92 having cam following end faces 94, 96 co-acting with elliptical cam surfaces 98,100 formed on cams 102, 104 mounted on output shafts 106, 108 of speed reducing gear boxes 110, 112 and electric drive motors 114, 116. Further thrust blocks 118 (Figures 12 and 13) slidingly abut end faces 120 of the clamp bodies 86, 88 and, in turn, have cam following end faces 122 co-acting with elliptical cam surfaces 124 formed on cams 126 mounted on output shafts 128 of speed reducing gear boxes 130 and electric drive motors 132.

In operation, end portions of workpieces 134 to be butt welded together are positioned within the clamp bodies 86, 88. Synchronously energising the electric motors 114 moves the clamp bodies 86 to a gripping position during the rising portion of the cycle of the cams 102. Synchronously energising the electric motors 116 moves the clamp bodies 88 to a gripping position during the rising portion of the cycle of the cams 104. The clamp bodies 86, 88 move to an open position during the falling portions of the cycles of the respective cams 102, 104, as indicated in chain dotted outline, under the influence of compression springs (not shown). Synchronously energising the electric motors 132 urges the pairs of the clamp bodies 86, 88 toward each other during the rising portion of the cycle of the cams 126. The pairs of clamp bodies 86, 88 are urged apart during the falling portion of the cycle of the cams 126, as indicated in chain dotted outline, by the action of compression springs (not shown). With both pairs of the clamp bodies 86, 88 in the gripping position, moving the pairs toward each other applies welding pressure to the workpiece. With only one pair of the clamp bodies 86, 88 in the gripping position, moving the pairs toward each other effects shearing and clearance of flash material displaced from the weld site by virtue of the workpiece, rigidly gripped in one pair of clamp bodies, being moved axially relative to a nose portion of the other pair of the clamp bodies.

A sequencing device is utilised to control energisation of the electric motors 114, 116 and 132 in synchronised sequence to effect multiple upset, cold pressure, welding with flash removal intermediate each successive application of welding pressure.

It will be appreciated that other forms of linkage between the electric motors 114, 116, 132 together with the speed reducing gear output shafts 106, 108, 128 and the clamp bodies 86, 88, such as those described in conjunction with the foregoing embodiments, may be utilised in whole or part substitution for the arrangement of Figures 10 to 13 in which the elliptical cam surfaces 98, 100, 124 make direct contact with the thrust blocks 90, 92, 118.

It will also be appreciated that other cam arrangements may be utilised such as utilising the electric motor to provide an intermittent and reversing drive to a suitably profiled cam.

## Claims

1. Multiple upset, cold pressure, welding apparatus including a welding die set (2, 62, 83) having two pairs of die halves each formed with a groove providing a bore in a closed position of the respective pairs of die halves for effecting gripping of end portions of first and second workpieces (32, 82, 34, 134) reciprocable between the closed position in which the associated portion of the workpiece is gripped and an open position in which the associated portion of the workpiece is released and also being reciprocable in a direction parallel to the longitudinal axis of the workpieces to apply or relax a welding pressure across abutting faces of the end portions of the workpieces, **characterised in that** means (24, 26, 46A, 46B, 46C, 72, 73, 98, 100, 124) for translating a rotary motion to a reciprocating linear motion are connected to a rotary output shaft (22, 22A, 22B, 76, 77, 106, 108, 128) of a speed reducing gear means (20, 20A, 78, 79, 110, 112, 130) in turn connected to an electric drive means, (18, 18A, 80, 81, 114, 116, 132) and are connected to reciprocate the die halves.

2. Multiple upset, cold pressure, welding apparatus as claimed in Claim 1 **characterised in that** the pairs of die halves of the welding die set (2) are mounted in a pair of blocks (4) slidingly reciprocable in a housing (6), the blocks (4) each being provided with pivot connections (8) to lever arms (10, 12) mounted on fulcrum pins (14, 16), with one of the lever arms (12) carrying a high torque, low speed, electric drive motor (18) and a speed reducing gear box (20) driving an output shaft (22) carrying a crank (24) and a connecting rod (26) is positioned between a crank pin (28) on the crank (24) and a connecting pin (30) on the other lever arm (10) such that energisation of the electric motor (18) effects oscillation of the lever arms (10, 12) about the fulcrum pins (14, 16) and thereby reciprocating movement of the pivot connections (8) and the associated blocks (4) to move the die halves of the welding die set (2) between the gripping and the open positions whilst applying or relaxing welding pressure.

3. Multiple upset, cold pressure, welding apparatus as claimed in Claim 1, **characterised in that** a rotatable cam (48A, 48B, 48C, 74, 75, 102, 104, 126) having an elliptical cam surface (46A, 46B, 46C, 72, 73, 98, 100, 124) is mounted on the output shaft (22, 22A, 22B, 76, 77, 106, 108, 128) of a speed reducing gear means connected to an electric drive means (22, 22A, 22B, 76, 77, 106, 108, 128), a reciprocable cam follower (37, 39, 44, 60, 70, 71, 94, 96, 122) is resiliently biassed into contact with the elliptical cam surface and the reciprocable cam follower is connected to effect reciprocation of the die halves.

4. Multiple upset, cold pressure, welding apparatus as claimed in Claim 3, **characterised in that** the pairs of die halves of the welding die set (2) are mounted in a pair of blocks (4) slidingly reciprocable in a housing (6), the blocks (4) each being provided with pivot connections (8A) to lever arms (10, 12) mounted on fulcrum pins (14, 16) and carrying cam follower rollers (37, 39) on end portions (34, 36) remote from the pivot connections (8A), with a cam (48A) having an elliptical cam surface (46A) positioned intermediate the cam follower rollers (37, 39) and biassing means arranged to urge the cam follower rollers into contact with the elliptical cam surface (46A), the cam (48A) being mounted on an output shaft (22A) of a speed reducing gear box (20A) driven from a high torque, low speed, electric motor (18A) such that energisation of the electric motor (18A) effects oscillation of the lever arms (10, 12) about the fulcrum pins (14, 16) and thereby reciprocating movement of the pivot connections (8A) and the associated blocks (4) to move the die halves of the welding die set (2) between the gripping and the open positions whilst applying or relaxing welding pressure.

5. Multiple upset, cold pressure, welding apparatus as claimed in Claim 3, **characterised in that** the pairs of die halves of the welding die set (2) are mounted in a pair of blocks (4) slidingly reciprocable in a housing (6), the blocks (4) each being provided with pivot connections (8A) to lever arms (10, 12) mounted on fulcrum pins (14, 16) and carrying on end portions (34, 36) remote from the pivot connections (8A) toggle links (38, 40) connected together at a central pivot (42) carrying a cam follower roller (44) co-acting with an elliptical cam surface (46B) on a cam 48B) mounted on an output shaft (22B) of a speed reducing gear box (20A) driven from a high torque, low speed, electric motor (18A) such that energisation of the electric motor (18A) effects oscillation of the lever arms (10, 12) about the fulcrum pins (14, 16) and thereby reciprocating movement of the pivot connections (8A) and the associated blocks (4) to move the die halves of the welding die set (2) between the gripping and the open positions whilst applying or relaxing welding pressure.

6. Multiple upset, cold pressure, welding apparatus as claimed in Claim 3, **characterised in that** the pairs of die halves of the welding die set (2) are mounted in a pair of blocks (4) slidingly reciprocable in a housing (6), the blocks (4) each being provided with pivot connections (8) to lever arms (10, 12) mounted on fulcrum pins (14, 16) resiliently biassed toward each other and formed at end portions (34, 36) remote from the pivot connections (8) with ramp surfaces (50, 52) arranged to inter-act with rollers (54, 56) positioned on a wedge (58), the wedge (58) being reciprocable and carrying a cam follower roller (60) co-acting with an elliptical cam surface (46C) on a cam (48C) mounted on an output shaft (22) of a speed reducing gear box driven from a high torque, low speed, electric motor (18) and a speed reducing gear box (20) driving an output shaft (22) carrying a crank (24) and a connecting rod (26) is positioned between a crank pin (28) on the crank (24) and a connecting pin (30) on the other lever arm (10) such that energisation of the electric motor (18) effects oscillation of the lever arms (10, 12) about the fulcrum pins (14, 16) and thereby reciprocating movement of the pivot connections (8) and the associated blocks (4) to move the die halves of the welding die set (2) between the gripping and the open positions whilst applying or relaxing welding pressure.

7. Multiple upset, cold pressure, welding apparatus as claimed in Claim 3, **characterised in that** a welding die set (62) includes pairs of die halves positioned in a pair of blocks (64) slidingly reciprocable in a housing (66) mounted on a frame (68) with the blocks (64) resiliently biassed apart and respectively formed with outer end faces (70) arranged to co-act with elliptical cam surfaces (72) formed on rotatable cams (74) mounted on output shafts of associated speed reducing gear boxes (78) and electric drive motors (80) such that energisation of the electric drive motors (80) effects reciprocation of the blocks (64) to move the die halves between gripping and open positions whilst applying and relaxing welding pressure.

8. Multiple upset, cold pressure, welding apparatus as claimed in Claim 3, **characterised in that** a welding die set (62) includes a pair of die halves positioned in a pair of blocks (64) slidingly reciprocable in a housing (66) with the blocks (64) resiliently biassed apart and respectively connected to pairs of toggle links (61, 63) at block pivots (65), the toggle links each being connected to the frame (68) at a frame pivot (67) remote from the block pivot (65) and each having a central pivot (69) carrying a cam follower roller (71) arranged to co-act with an associated elliptical cam surface on a cam (75) mounted on an output shaft (77) of a speed reducing gear box (79) and high torque, low speed, electric drive motor (81), such that energisation of the electric drive motors (81) effects rotation of the cams (75) and displacement of the cam follower rollers (71) together with the central pivots (69) of the toggle links (61, 63) to cause reciprocation of the blocks (64) and thereby move the die halves of the die set (62) between the gripping and the open positions whilst applying and relaxing welding pressure.

9. Multiple upset, cold pressure, welding apparatus as claimed in Claim 1, **characterised in that** a welding die set (83) having two pairs (86, 88) of die halves each biassed apart and formed with a groove providing a bore in a closed position of the respective pairs of die halves for effecting gripping of end portions of first and second workpieces (134) reciprocable between the closed position in which an associated portion of the workpiece is gripped and an open position in which the associated portion of the workpiece is released and also being reciprocable in a direction parallel to the longitudinal axis of the portions of the workpieces to apply or relax a welding pressure across abutting faces of the end portions of the workpieces, and a plurality of rotatable cams (102, 104) each respectively having an elliptical cam surface (98, 100) are each mounted on respective output shafts (106, 108) of speed reducing means (110, 112) connected to electric drive means (114, 116), with respective elliptical cam surfaces (98, 100) co-acting with reciprocable cam follower means (94, 96) connected respectively selectively to effect collective or individual reciprocation of the die halves between a closed position and an open position and a further plurality of rotatable cams (126) each respectively having an elliptical cam surface (124) are each mounted on respective output shafts (128) of speed reducing means (130) connected to electric drive means (132) with respective elliptical cam surfaces (124) co-acting with reciprocable cam follower means (122) connected to effect the application or relaxation of the welding pressure across the abutting faces of the end portions of the workpieces (134).

10. Multiple upset, cold pressure, welding apparatus as claimed in any preceding claim, **characterised in that** an electrical sequencing device is provided to control energisation of the electric drive means (18, 18A, 80, 81, 114, 116, 132) in accordance with a pre-determined sequence.

## Patentansprüche

1. Mehrfachkaltpress-Stumpfschweißgerät (2, 62, 83) mit zwei Paaren von Matrizenhälften, die jeweils mit einer Nut ausgebildet sind, die für eine Bohrung in einer geschlossenen Stellung des jeweiligen Paares der Matrizenhälfte sorgen, um das Greifen von Endabschnitten von ersten und zweiten Werkstücken (32, 82, 34, 134) zu bewirken, die zwischen der geschlossenen Stellung, in welcher der zugeordnete Abschnitt des Werkstücks gegriffen wird, und einer offenen Stellung, in welcher der zugeordnete Abschnitt des Werkstücks losgelassen wird, hin- und herbewegbar sind und die auch in Richtung parallel zu der Längsachse der Werkstücke hin und her bewegbar sind, um einen Schweißdruck an den Stoßflächen der Endabschnitte der Werkstücke anzulegen oder zu lösen,
**dadurch gekennzeichnet,**
**dass** Mittel (24, 26, 46A, 46B, 46C, 72, 73, 98, 100, 124) zur Übersetzung einer Drehbewegung in eine lineare Hin- und Herbewegung mit einer drehbaren Abtriebswelle (22, 22A, 22B, 76, 77 106, 108, 128) einer Geschwindigkeitsreduzier-Getriebeeinrichtung (20, 20A, 78, 79, 110, 112, 130) verbunden sind, die wiederum mit einer elektrischen Antriebseinrichtung (18, 18A, 80, 81, 114, 116, 132) verbunden ist, und dass diese Einrichtungen zur Hin- und Herbewegung der Matrizenhälften miteinander verbunden sind.

2. Mehrfachkaltpress-Stumpfschweißgerät nach Anspruch 1,
**dadurch gekennzeichnet,**
**dass** die Paare der Matrizenhälften des Schweißmatrizensatzes (2) in einem Paar von Blöcken (4) montiert sind, die in einem Gehäuse (6) in einer Gleitführung hin- und hergehend angeordnet sind, wobei die Blöcke (4) jeweils mit Schwenkverbindungen (8) zu Hebelarmen (10, 12) versehen sind, die an Lagerzapfen (14, 16) montiert sind, wobei einer der Hebelarme (12) einen elektrischen Antriebsmotor (14) niedriger Geschwindigkeit und hohen Drehmoments trägt und ein Geschwindigkeitsreduziergetriebe (20) eine Abtriebswelle (22) antreibt, welche eine Kurbel (24) trägt, und dass eine Verbindungsstange (26) zwischen einem Kurbelstift (28) auf der Kurbel (24) und einem Verbindungsstift (30) auf dem anderen Hebelarm (10) angeordnet ist, so dass die Erregung des Elektromotors (18) die Oszillation der Hebelarme (10, 12) um die Lagerzapfen (14, 16) bewirkt und daher auch die Hin- und Herbewegung der Schwenkverbindungen (8) und der zugeordneten Blöcke (4), um die Matrizenhälften des Schweißmatrizensatzes (2) zwischen der Greifstellung und der offenen Stellung zu bewegen, während Schweißdruck angelegt oder gelöst wird.

3. Mehrfachkaltpress-Stumpfschweißgerät nach Anspruch 1,
**dadurch gekennzeichnet,**
**dass** ein drehbarer Nocken (48A, 48B, 48C, 74, 75, 102, 104, 126) mit einer elliptischen Nockenoberfläche (46A, 46B, 46C, 72, 73, 98, 100, 124) auf der Abtriebswelle (22, 22A, 22B, 76, 77, 106, 108, 238) einer Geschwindigkeitsreduzier-Getriebeeinrichtung montiert ist, die mit einer elektrischen Antriebseinrichtung (22, 22A, 22B, 76, 77, 106, 108, 128) verbunden ist, wobei ein hin- und hergehender Nockenfolger (37, 39, 44, 60, 70, 71, 94, 96, 122) federnd in Kontakt mit der elliptischen Nockenoberfläche vorgespannt ist, und dass der hin- und hergehende Nockenfolger zum Bewirken der Hin- und Herbewegung der Matrizenhälften angeordnet ist.

4. Mehrfachkaltpress-Stumpfschweißgerät nach Anspruch 3,
**dadurch gekennzeichnet,**
**dass** die Paare der Matrizenhälften des Schweißmatrizensatzes (2) in einem Paar von Blöcken (4) montiert sind, die in Gleitführung in einem Gehäuse (6) hin- und hergehend angeordnet sind, wobei die Blöcke (4) jeweils mit Schwenkverbindungen (8A) zu Hebelarmen (10, 12) versehen sind, die an Schwenkzapfen (14, 16) montiert sind und Nockenfolgenrollen (37, 39) an Endabschnitten (34, 36) entfernt von den Schwenkverbindungen (8A) tragen, wobei ein Nocken (48A) eine elliptische Nockenoberfläche (46A9 besitzt und zwischen den Nockenfolgerollen (37, 39) gelegen ist, wobei Vorspannungsmittel zum Drängen der Nockenfolgerollen in Kontakt mit der elliptischen Nockenoberfläche (46A) angeordnet sind, wobei ferner der Nocken (48A) auf einer Abtriebswelle (22A) des Geschwindigkeitsreduzier-Getriebes (20A) montiert ist, das von einem Elektromotor (18A9 niedriger Geschwindigkeit und hohen Drehmoments angetrieben wird, so dass die Erregung des Elektromotors (18A) die Oszillation der Hebelarme (10, 12) um die Lagerzapfen (14, 16) bewirkt und dabei die Hin- und Herbwegung der Schwenkverbindungen (8A) und der zugeordneten Blöcke (4) zur Bewegung der Matrizenhälften des Schweißmatrizensatzes (2) zwischen der Greifstellung und der offenen Stellung bewirkt, während Schweißdruck angelegt oder gelöst wird.

5. Mehrfachkaltpress-Stumpfschweißgerät nach Anspruch 3,
**dadurch gekennzeichnet,**
**dass** die Paare der Matrizenhälften des Schweißmatrizensatzes (2) in einem Paar von Blöcken (4) montiert sind, die in Gleitführung in einem Gehäuse hin- und hergehend angeordnet sind, wobei die Blöcke (4) jeweils mit Schwenkverbindungen (8A) zu Hebelarmen (10, 12) versehen sind, die auf Lagerzapfen (14, 16) montiert und an Endabschnitten (34, 36) entfernt von den Schwenkverbindungen (8A) Kniehebel (38, 40) tragen, welche bei einer zentralen Schwenkachse (72) miteinander verbunden sind, die eine Nockenfolgerolle (44) trägt, welche mit einer elliptischen Nockenoberfläche (46B) eines Nockens (48B) zusammenarbeitet, der auf einer Abtriebswelle (22B) eines Geschwindigkeitsreduzier-Getriebes (20A) montiert ist, das von einem Elektromotor (18A) niedriger Geschwindigkeit und hohen Drehmoments angetrieben wird, so dass die Erregung des Elektromotors (18A) die Oszillation der Hebelarme 810, 12) um die Lagerzapfen (14, 16) herbeiführt und dabei die Hin- und Herbewegung der Schwenkverbindungen (8A) und der zugeordneten Blöcke (4) bewirkt, um die Matrizenhälften des Schweißmatrizensatzes (2) zwischen der Greifstellung und der offenen Stellung zu bewegen, während der Schweißdruck angelegt oder gelöst wird.

6. Mehrfachkaltpress-Stumpfschweißgerät nach Anspruch 3,
**dadurch gekennzeichnet,**
**dass** die Paare von Matrizenhälften des Schweißmatrizensatzes (2) in einem Paar von Blöcken (4) montiert sind, die in einer Gleitführung in einem Gehäuse (6) hin- und hergehend angeordnet sind, wobei die Blöcke jeweils mit Schwenkverbindungen (8) zu Hebelarmen (10, 12) versehen sind, die an Lagerzapfen (14, 16) montiert sind, welche federnd zueinander vorgespannt sind und an Endabschnitten (34, 36) entfernt von den Schwenkverbindungen (8) mit Schrägflächen (50, 52) versehen sind, welche zur Wechselwirkung mit Rollen (54, 56) angeordnet sind, die an einem Keil (58) angeordnet sind, wobei der Keil (58) hin- und hergehend angeordnet ist und eine Nockenfolgerolle (60) trägt, die mit einer elliptischen Nockenoberfläche (46C) an einer Nocke (48C) zusammenarbeitet, welche auf einer Abtriebswelle (22) eines Geschwindigkeitsreduzier-Getriebes montiert ist, das von einem Elektromotor (14) niedriger Geschwindigkeit und hohen Drehmoments angetrieben wird, dass ein GeschwindigkeitsreduzierGetriebe (20) eine Abtriebswelle (22) antreibt, die eine Kurbel (24) trägt und dass eine Verbindungsstange (26) zwischen einem Kurbelstift (28) auf der Kurbel (24) und einem Verbindungsstift (30) auf dem anderen Hebelarm (10) angeordnet ist, so dass die Erregung des Elektromotors (18) die Oszillation der Hebelarme (10, 12) um die Lagerzapfen (14, 16) und dabei die Hin- und Herbewegung der Schwenkverbindungen (8) und der zugeordneten Blöcke (4) bewirkt, um die Matrizenhälften des Schweißmatrizensatzes (2) zwischen der Greifstellung und der offenen Stellung zu bewegen, während Schweißdruck angelegt oder gelöst wird.

7. Mehrfachkaltpress-Stumpfschweißgerät nach Anspruch 3,
**dadurch gekennzeichnet,**
**dass** ein Schweißmatrizensatz (62) Paare von Matrizenhälften umfasst, die in einem Paar von Blöcken (64) angeordnet sind, welche in Gleitführung in einem Gehäuse (66) hin- und hergehend angeordnet sind, das auf einem Rahmen (68) montiert ist, wobei die Blöcke (64) federnd voneinander vorgespannt sind und jeweils mit äußeren Endflächen (70) ausgebildet sind, die zur Zusammenarbeit mit elliptischen Nockenflächen (72) von drehbaren Nocken (74) dienen, die auf Abtriebswellen von zugeordneten Geschwindigkeitsreduzier-Getrieben (78) und von elektrischen Antriebsmotoren (80) angetrieben sind, so dass die Erregung der elektrischen Antriebsmotore (80) das Hin- und Hergehen der Blöcke (64) bewirkt, um die Matrizenhälften zwischen Greifstellungen und offenen Stellungen zu bewegen, während Schweißdruck angelegt und gelöst wird.

8. Mehrfachkaltpress-Stumpfschweißgerät nach Anspruch 3,
**dadurch gekennzeichnet,**
**dass** ein Schweißmatrizensatz (62) zwei Matrizenhälften umfasst, die in einem Paar von Blöcken (64) angeordnet sind, welche in Gleitführung in einem Gehäuse (66) hin- und hergehend angeordnet sind, wobei die Blöcke (64) federnd voneinander vorgespannt sind und jeweils mit Paaren von Kniehebeln (61, 63) an Blockschwenkachsen (65) verbunden sind, wobei die Kniehebel jeweils mit dem Rahmen (68) an einer Rahmenschwenkachse (67) entfernt von der Blockschwenkachse (65) verbunden sind und jeweils eine zentrale Schwenkachse (69) aufweisen, die eine Nockenfolgerolle (71) trägt, welche mit einer zugeordneten elliptischen Nockenfläche auf eineme Nocken (75) zusammenarbeitet, der auf einer Abtriebswelle (77) eines Geschwindigkeitsreduzier-Getriebes (79) und eines elektrischen Antriebsmotors (61) niedriger Geschwindigkeit und hohen Drehmoments montiert ist, so dass die Erregung der elektrischen Antriebsmotore (81) die Drehung der Nocken (75) und die Verschiebung der Nockenfolgerollen (71) zusammen mit den zentralen Schwenkachsen (69) der Kniehebel (61, 63) bewirkt, um das Hin- und Hergehen der Blöcke (64) herbeizuführen und dabei die Matrizenhälften des Matrizensatzes (62) zwischen der Greifstellung und der offenen Stellung zu bewegen, während Schweißdruck angelegt und gelöst wird.

9. Mehrfachkaltpress-Stumpfschweißgerät nach Anspruch 1,
**dadurch gekennzeichnet,**
**dass** ein Schweißmatrizensatz (83) zwei Paare (86, 88) von Matrizenhälften aufweist, die jeweils voneinander weg vorgespannt sind und mit einer Nut zur Schaffung einer Bohrung in einer geschlossenen Stellung der jeweiligen Paare der Matrizenhälften geformt sind, um Endabschnitte von ersten und zweiten Werkstücken (134) greifen zu können, die zwischen der geschlossenen Stellung, in welcher ein zugeordneter Abschnitt des Werkstückes gegriffen wird, und einer offenen Stellung, in welcher der zugeordnete Abschnitt des Werkstückes losgelassen wird, hin- und hergehend angeordnet sind und die auch in einer Richtung parallel zur Längsachse der Abschnitte der Werkstücke hin- und hergehend angeordnet sind, um einen Schweißdruck an aneinander stoßenden Flächen der Endabschnitte der Werkstücke anzulegen oder zu lösen, dass eine Mehrzahl von drehbaren Nocken (102, 104), die jeweils eine elliptische Nockenoberfläche (98, 100) besitzen, jeweils auf jeweiligen Abtriebswellen (106, 108) von Geschwindigkeitsreduzier-Einrichtungen (110, 112) montiert sind, welche mit elektrischen Antriebsmittel (114, 116) verbunden sind, wobei die jeweiligen elliptischen Nockenoberflächen (98, 100) mit hin- und hergehenden Nockenfolgemittel (94, 96) zusammenarbeiten, die jeweils selektiv miteinander verbunden sind, um kollektives oder individuelles Hin- und Hergehen der Matrizenhälften zwischen einer geschlossenen Stellung und einer offenen Stellung zu bewirken, und dass eine weitere Mehrzahl von drehbaren Nocken (126), die jeweils eine elliptische Nockenoberfläche (124) besitzen, jeweils auf jeweiligen Abtriebswellen (128) von Geschwindigkeitsreduzier-Mitteln (130) montiert sind, die mit elektrischen Antriebsmitteln (132) verbunden sind, wobei jeweilige elliptische Nockenoberflächen (124) mit hin- und hergehenden Nockenfolgemitteln (122) zusammenwirken, welche verbunden sind, um die Anlage oder das Lösen von Schweißdruck an den aneinander stoßenden Flächen der Endabschnitte der Werkstücke (134) zu bewirken.

10. Mehrfachkaltpress-Stumpfschweißgerät
nach einem der vorhergehenden Ansprüche,
**dadurch gekennzeichnet,**
**dass** eine elektrische Folgesteuereinrichtung zur Steuerung der Erregung der elektrischen Antriebsmittel (18, 18A, 80, 81, 114, 116, 132) in Übereinstimmung mit einer vorbestimmten Reihenfolge vorgesehen ist.

## Revendications

1. Appareil de soudage à froid par refoulement multiple, comprenant un ensemble de moulage de soudage (2, 62, 83) comportant deux paires de demi-moules formées chacune avec une rainure fournissant un alésage dans une position fermée des paires respectives de demi-moules pour effectuer une préhension de parties d'extrémité de première et seconde pièces de fabrication (32, 82, 34, 134) pouvant se déplacer en va-et-vient entre la position fermée dans laquelle la partie associée de la pièce de fabrication est saisie et une position ouverte dans laquelle la partie associée de la pièce de fabrication est relâchée et pouvant également se déplacer en va-et-vient dans une direction parallèle à l'axe longitudinal des pièces de fabrication pour appliquer ou relâcher une pression de soudage sur les faces contiguës des parties d'extrémité des pièces de fabrication, **caractérisé en ce qu'**un moyen (24, 26, 46A, 46B, 46C, 72, 73, 98, 100, 124) destiné à convertir un mouvement rotatif en un mouvement linéaire alternatif est relié à un arbre de sortie rotatif (22, 22A, 22B, 76, 77, 106, 108, 128) d'un moyen d'engrenages réducteurs de vitesse (20, 20A, 78, 79, 110, 112, 130) relié quant à lui à un moyen d'entraînement électrique (18, 18A, 80, 81, 114, 116, 132) et est relié pour effectuer un mouvement alternatif des demi-moules.

2. Appareil de soudage à froid par refoulement multiple selon la revendication 1, **caractérisé en ce que** les paires de demi-moules de l'ensemble de moulage de soudage (2) sont montées dans une paire de blocs (4) pouvant se déplacer en va-et-vient de manière coulissante dans un logement (6), les blocs (4) étant chacun dotés de raccordements sur pivot (8) à des bras de levier (10, 12) montés sur des pivots (14, 16), l'un des bras de levier (12) portant un moteur d'entraînement électrique (18) à couple élevé et à vitesse faible et une boîte d'engrenages réducteurs de vitesse (20) entraînant un arbre de sortie (22) portant un bras de manivelle (24) et une tige de raccordement (26) est positionnée entre un maneton (28) sur le bras de manivelle (24) et une broche de raccordement (30) sur l'autre bras de levier (10) de sorte que l'activation du moteur électrique (18) entraîne une oscillation des bras de levier (10, 12) autour des pivots (14, 16) et un déplacement en va-et-vient des raccordements sur pivot (8) et des blocs associés (4) afin de déplacer les demi-moules de l'ensemble de moulage de soudage (2) entre la position de préhension et la position ouverte tout en appliquant ou relâchant la pression de soudage.

3. Appareil de soudage à froid par refoulement multiple selon la revendication 1, **caractérisé en ce qu'**une came rotative (48A, 48B, 48C, 74, 75, 102, 104, 126) ayant une surface de came elliptique (46A, 46B, 46C, 72, 73, 98, 100, 124) est montée sur l'arbre de sortie (22, 22A, 22B, 76, 77, 106, 108, 128) d'un moyen d'engrenages réducteurs de vitesse relié à un moyen d'entraînement électrique (22, 22A, 22B, 76, 77, 106, 108, 128), un suiveur de came à déplacement en va-et-vient (37, 39, 44, 60, 70, 71, 94, 96, 122) est élastiquement sollicité pour entrer en contact avec la surface de came elliptique et le suiveur de came à déplacement en va-et vient est relié pour effectuer un déplacement en va-et-vient des demi-moules.

4. Appareil de soudage à froid par refoulement multiple selon la revendication 3, **caractérisé en ce que** les paires de demi-moules de l'ensemble de moulage de soudage (2) sont montées dans une paire de blocs (4) pouvant se déplacer en va-et-vient de manière coulissante dans un logement (6), les blocs (4) étant chacun dotés de raccordements sur pivot (8A) à des bras de levier (10, 12) montés sur des pivots (14, 16) et portant des rouleaux suiveurs de came (37, 39) sur des parties d'extrémité (34, 36) éloignées des raccordements sur pivot (8A), une came (48A) ayant une surface de came elliptique (46A) étant positionnée entre les rouleaux suiveurs de came (37, 39) et un moyen de sollicitation agencé pour pousser les rouleaux suiveurs de came en contact avec la surface de came elliptique (46A), la came (48A) étant montée sur un arbre de sortie (22A) d'une boîte d'engrenages réducteurs de vitesse (20A) entraînée par un moteur électrique (18A) à couple élevé et à vitesse faible de sorte que l'activation du moteur électrique (18A) entraîne une oscillation des bras de levier (10, 12) autour des pivots (14, 16) et un déplacement en va-et-vient des raccordements sur pivot (8A) et des blocs associés (4) pour déplacer les demi-moules de l'ensemble de moulage de soudage (2) entre la position de préhension et la position ouverte tout en appliquant ou relâchant la pression de soudage.

5. Appareil de soudage à froid par refoulement multiple selon la revendication 3, **caractérisé en ce que** les paires de demi-moules de l'ensemble de moulage de soudage (2) sont montées dans une paire de blocs (4) pouvant se déplacer en va-et-vient de manière coulissante dans un logement (6), les blocs (4) étant chacun dotés de raccordements sur pivot (8A) à des bras de levier (10, 12) montés sur des pivots (14, 16) et portant, sur des parties d'extrémité (34, 36) éloignées des raccordements sur pivot (8A), des genouillères (38, 40) reliées ensemble au niveau d'un pivot central (42) portant un rouleau suiveur de came (44) coopérant avec une surface de came elliptique (468) sur une came (48B) montée sur un arbre de sortie (22B) d'une boîte d'engrenages réducteurs de vitesse (20A) entraînée par un moteur électrique (18A) à couple élevé et à faible vitesse de sorte que l'activation du moteur électrique (18A) entraîne une oscillation des bras de levier (10, 12) autour des pivots (14, 16) et ainsi un déplacement en va-et-vient des raccordements sur pivot (8A) et des blocs associés (4) pour déplacer les demi-moules de l'ensemble de moulage de soudage (2) entre la position de préhension et la position ouverte tout en appliquant ou relâchant la pression de soudage.

6. Appareil de soudage à froid par refoulement multiple selon la revendication 3, **caractérisé en ce que** les paires de demi-moules de l'ensemble de moulage de soudage (2) sont montées dans une paire de blocs (4) pouvant se déplacer en va-et-vient de manière coulissante dans un logement (6), les blocs (4) étant chacun dotés de raccordements sur pivot (8) à des bras de levier (10, 12) montés sur des pivots (14, 16) sollicités élastiquement pour aller l'un vers l'autre et formés, au niveau des parties d'extrémité (34, 36) éloignées des raccordements sur pivot (8), de surfaces de rampe (50, 52) agencées pour interagir avec des rouleaux (54, 56) positionnés sur une cale (58), la cale (58) pouvant se déplacer en va-et vient et portant un rouleau suiveur de came (60) coopérant avec une surface de came elliptique (46C) sur une came (48C) montée sur un arbre de sortie (22) d'une boîte d'engrenages réducteurs de vitesse entraînée par un moteur électrique (18) à couple élevé et à faible vitesse et une boîte d'engrenages réducteurs de vitesse (20) entraînant un arbre de sortie (22) portant un bras de manivelle (24) et une tige de raccordement (26) est positionnée entre un maneton (28) sur le bras de manivelle (24) et une broche de raccordement (30) sur l'autre bras de levier (10) de sorte que l'activation du moteur électrique (18) entraîne une oscillation des bras de levier (10, 12) autour des pivots (14, 16) et ainsi un déplacement en va-et-vient des raccordements sur pivot (8) et des blocs associés (4) pour déplacer les demi-moules de l'ensemble de moulage de soudage (2) entre la position de préhension et la position ouverte tout en appliquant ou relâchant la pression de soudage.

7. Appareil de soudage à froid par refoulement multiple selon la revendication 3, **caractérisé en ce qu'**un ensemble de moulage de soudage (62) comprend des paires de demi-moules positionnées dans une paire de blocs (64) pouvant se déplacer en va-et-vient de manière coulissante dans un logement (66) monté sur un cadre (68) avec les blocs (64) éloignés élastiquement et formés respectivement de faces d'extrémité extérieures (70) agencées pour coopérer avec des surfaces de came elliptiques (72) formées sur des cames rotatives (74) montées sur des arbres de sortie de boîtes d'engrenages réducteurs de vitesse associées (78) et des moteurs d'entraînement électriques (80), de sorte que l'activation des moteurs d'entraînement électriques (80) entraîne un déplacement en va-et-vient des blocs (64) afin de déplacer les demi-moules entre la position de préhension et la position ouverte tout en appliquant et relâchant la pression de soudage.

8. Appareil de soudage à froid par refoulement multiple selon la revendication 3, **caractérisé en ce qu'**un ensemble de moulage de soudage (62) comprend une paire de demi-moules positionnée dans une paire de blocs (64) pouvant se déplacer en va-et-vient de manière coulissante dans un logement (66) avec les blocs (64) éloignés élastiquement et reliés respectivement à des paires de genouillères (61, 63) au niveau de pivots de bloc (65), les genouillères étant chacune reliées au cadre (68) au niveau d'un pivot de cadre (67) éloigné du pivot de bloc (65) et chacune ayant un pivot central (69) portant un rouleau suiveur de came (71) agencé pour coopérer avec une surface de came elliptique associée sur une came (75) montée sur un arbre de sortie (77) d'une boîte d'engrenages réducteurs de vitesse (79) et un moteur d'entraînement électrique (81) à couple élevé et à vitesse faible, de sorte que l'activation des moteurs d'entraînement électriques (81) entraîne une rotation des cames (75) et le déplacement des rouleaux suiveurs de came (71) avec les pivots centraux (69) des genouillères (61, 63) pour entraîner le déplacement en va-et-vient des blocs (64) et ainsi déplacer les demi-moules de l'ensemble de moulage (62) entre la position de préhension et la position ouverte tout en appliquant et relâchant la pression de soudage.

9. Appareil de soudage à froid par refoulement multiple selon la revendication 1, **caractérisé en ce qu'**il comporte un ensemble de moulage de soudage (83) comportant deux paires (86, 88) de demi-moules, chacune étant maintenue éloignée et formée avec une rainure fournissant un alésage dans une position fermée des paires respectives de demi-moules pour effectuer la préhension de parties d'extrémité de première et seconde pièces de fabrication (134) pouvant se déplacer en va-et-vient entre la position fermée dans laquelle une partie associée de la pièce de fabrication est saisie et une position ouverte dans laquelle la partie associée de la pièce de fabrication est relâchée et pouvant également se déplacer en va-et-vient dans une direction parallèle à l'axe longitudinal des pièces de fabrication pour appliquer ou relâcher une pression de soudage sur les faces contiguës des parties d'extrémité des pièces de fabrication, et une pluralité de cames rotatives (102, 104) ayant respectivement chacune une surface de came elliptique (98, 100) sont montées chacune sur des arbres de sortie respectifs (106, 108) d'un moyen réducteur de vitesse (110, 112) relié à un moyen d'entraînement électrique (114, 116), les surfaces de came elliptiques respectives (98, 100) coopérant avec des moyens suiveurs de came à déplacement en va-et-vient (94, 96) reliés respectivement sélectivement pour effectuer un déplacement en va-et-vient collectif ou individuel des demi-moules entre une position fermée et une position ouverte, et une autre pluralité de cames rotatives (126) ayant chacune respectivement une surface de came elliptique (124) sont chacune montées sur des arbres de sortie respectifs (128) d'un moyen réducteur de vitesse (130) relié au moyen d'entraînement électrique (132), les surfaces de came elliptiques respectives (124) coopérant avec un moyen suiveur de came à déplacement en va-et-vient (122) relié pour entraîner l'application ou le relâchement de la pression de soudage sur les faces contiguës des parties d'extrémité des pièces de fabrication (134).

10. Appareil de soudage à froid par refoulement multiple selon l'une quelconque des revendications précédentes, **caractérisé en ce qu'**un dispositif de séquençage électrique est prévu pour commander l'activation du moyen d'entraînement électrique (18, 18A, 80, 81, 114, 116, 132) conformément à une séquence prédéterminée.
